# EUROPÄISCHE PATENTSCHRIFT

(11) **EP 2 975 360 B1**
(45) Veröffentlichungstag und Bekanntmachung des Hinweises auf die Patenterteilung: **07.03.2018**
(21) Anmeldenummer: 14177708.6
(22) Anmeldetag: 18.07.2014
(51) Int. Cl.: G01B 21/08, G01N 25/00

(54) **Photothermisches Messgerät zur Messung von Schichtdicken sowie Verfahren zur photothermischen Messung**
Photothermal measuring device for measuring layer thicknesses, method for photothermal measurement
Dispositif de mesure photo-thermique destiné à mesurer des épaisseurs de couche et procédé de mesure photo-thermique

(43) Veröffentlichungstag der Anmeldung: 20.01.2016
(73) Patentinhaber: OptiSense GmbH & Co. KG, 45721 Haltern am See (DE)
(72) Erfinder: Nelke, Georg, 45721 Haltern am See (DE)
(74) Vertreter: Rohmann, Michael

(56) Entgegenhaltungen:
- WO-A1-01/31293
- WO-A2-2011/137547
- WO-A2-2013/005172
- DE-A1- 3 813 258
- DE-A1- 3 913 474
- DE-A1- 19 606 453

## Beschreibung

Die Erfindung betrifft ein photothermisches Messgerät zur Messung von Schichtdicken, insbesondere von Lackschichtdicken. Weiterhin betrifft die Erfindung ein Verfahren zur photothermischen Messung mit einem photothermischen Messgerät.

Photothermische Messgeräte sind aus Praxis und Literatur grundsätzlich bekannt. Beispielsweise sind in WO 2013/005172 A2, WO 01/31293 A1 und DE 196 06 453 A1 photothermische Messgeräte beschrieben. Derartige photothermische Messgeräte umfassen regelmäßig eine Anregungslichtquelle, Optiken, die das Licht der Anregungslichtquelle auf eine Probe lenken sowie Optiken, welche die von der Probe zurückreflektierte Wärmestrahlung im Nahinfrarot-Bereich wieder einsammeln und schließlich auf einen Infrarot-Sensor leiten. Zumindest die genannten Optiken sind typischerweise in einem Messkopf angeordnet. Dann wird mittels einer Recheneinheit die Schichtdicke der Probe aus dem Ansteigen und/oder Abklingen der Intensität der von der Probe emittierten Wärmestrahlung sowie aus *a priori* bekannten Parametern, wie dem zu vermessenden Material, errechnet.

Um die Schichtdicke über einen größeren Bereich nicht nur punktuell zu erfassen oder um generell etwas mehr räumliche Flexibilität zu erzielen, weisen die bekannten Messköpfe entweder ein Scansystem auf oder aber die Messköpfe sind relativ zu den Proben verfahrbar. Typische Scansysteme ermöglichen Abtastwege von lediglich einigen Millimetern bis wenigen Zentimetern über die Probenoberfläche hinweg. Typische Antriebe zur Verfahrbarkeit der Messköpfe sind beispielsweise Linearmotoren. Sollen nun räumliche Freiheiten über mehrere Meter hinweg erreicht werden, müssen dementsprechend aufwendige weil große und obendrein auch ortsfeste Antriebe vorgesehen werden. Ein solcher Aufbau ist jedoch völlig unwirtschaftlich.

Beispielsweise in der fertigungsnahen Qualitätskontrolle von Lackschichten ist es von großem Vorteil, dass frisch lackierte bzw. vorbehandelte Lackbauteile in der Fertigungsstraße berührungsfrei an verschiedensten Punkten überprüft werden. Dabei müssen Distanzen von einigen Zentimetern bis zu vielen Dutzend Metern überwunden werden. Gleichzeitig muss aufgrund der Fokussierung des Anregungslichtes auf die Probe und aufgrund der Laufzeitmessung der Wärmestrahlung ein Arbeitsabstand eingehalten werden, um brauchbare Messergebnisse zu erzielen. Der Arbeitsabstand ist jedoch nur um wenige Millimeter fehlertolerant. So führt die natürliche Unruhe der menschlichen Hand leicht dazu, dass die photothermische Messung verwackelt und in der Folge unbrauchbar wird.

Eine zusätzliche Anforderung an die Flexibilität stellen Sicherheitsanforderungen dar. Denn aufgrund der erforderlichen Erwärmung der Probe werden hohe Lichtleistungen benötigt. Dies führt zu entsprechenden Gefährdungen von anwesenden Personen. Es ist somit zweckmäßig, dass das photothermische Messgerät derartig ausgebildet ist, dass keine zusätzlichen und sehr lästigen Schutzmaßnahmen, wie beispielsweise Schutzbrillen, für die anwesenden Personen erforderlich sind.

Der Erfindung liegt daher das technische Problem zugrunde, beispielsweise für die fertigungsnahe Qualitätskontrolle von Lackschichten, ein photothermisches Messgerät zur Messung von Lackschichtdicken anzugeben, welches gleichzeitig berührungsfreie präzise Messungen ermöglicht, ein größtmögliches Maß an Flexibilität gewährleistet und zudem wirtschaftlich ist. Weiterhin liegt der Erfindung das technische Problem zugrunde, ein Verfahren zur photothermischen Messung anzugeben, welches berührungsfreie präzise Messungen ermöglicht, räumlich flexibel ist und gleichzeitig wirtschaftlich ist.

Zur Lösung des technischen Problems lehrt die Erfindung ein photothermisches Messgerät zur Messung von Schichtdicken, insbesondere von Lackschichtdicken, insbesondere nach einem weiter unten beschriebenen erfindungsgemäßen Verfahren, umfassend einen handlichen Messkopf, wobei das photothermische Messgerät eine Anregungslichtquelle zur Erwärmung einer Probe aufweist, wobei das photothermische Messgerät einen Infrarot-Sensor zur Detektion von Wärmestrahlung der erwärmten Probe umfasst, wobei im photothermischen Messgerät ein Abstandsmessgerät zur Messung des Abstands zwischen Messkopf und Probe vorgesehen ist, wobei der Messkopf ein Linsensystem umfasst, wobei das photothermische Messgerät in Abhängigkeit von der Abstandsmessung auslösbar ist und die photothermische Messung im Falle eines Abstandes im Sollbereich automatisch ausgelöst wird.

Der Begriff "handlich" meint, dass der Messkopf von Gewicht und Abmessungen her mit einer Hand zu führen ist. Insbesondere ist hiermit gemeint, dass der Messkopf sehr einfach mit einer Hand zu führen ist, und von den Abmessungen her beispielsweise in der Größenordnung eines Mobiltelefons oder einer Maus liegt. Vorzugsweise besitzt der Messkopf die Größe einer Taschenlampe oder einer Pistole. Besonders vorzugsweise ist der Messkopf stiftartig ausgebildet.

Das photothermische Messgerät weist gemäß einer bevorzugten Ausführungsform eine tragbare Basis und ein Kabel auf. Vorzugsweise verbindet das Kabel die Basis und den Messkopf. Der Ausdruck "tragbar" meint, dass die Basis lediglich von einer Person mit einer Hand getragen werden können soll. Die Basis umfasst bevorzugt eine Spannungsversorgung. Vorzugsweise umfasst die Basis eine Recheneinheit sowie Schnittstellen zur Kommunikation mit anderen Recheneinheiten, wie beispielsweise PCs, Notebooks und Smartphones. Besonders vorzugsweise umfasst die Basis lediglich die Spannungsversorgung, die Recheneinheit sowie die Schnittstellen. Andere Ausführungsformen sehen vor, dass die Basis auch Lichtquellen, optische Sensoren und/oder Kollimatoren in Form von Lichtwellenleiteranschlüssen umfasst. Das Kabel enthält bevorzugt elektrische Leitungen zur Weiterleitung der elektrischen Energie von der Basis zur Anregungslichtquelle. Das Kabel enthält vorzugsweise auch eine Datenleitung, welche die gemessenen Daten des Infrarot-Sensors und des Abstandsmessgerätes zur Recheneinheit weiterleitet. Es ist jedoch grundsätzlich denkbar, dass die Recheneinheit sich nicht in der Basis, sondern in dem Messkopf befindet und insofern keine Datenleitung im Kabel erforderlich ist. Darüber hinaus ist es möglich, dass beispielsweise die Anregungslichtquelle in der Basis angeordnet ist und das Anregungslicht über Kollimatoren und Lichtwellenleiter durch das Kabel geführt wird. Gemäß einer besonders bevorzugten Ausführungsform sind sämtliche optischen Elemente in dem Messkopf angeordnet, so dass lediglich elektrische Energie und Daten durch das Kabel geführt werden.

Gemäß einer anderen bevorzugten Ausführungsform sind auch die Spannungsversorgung in Form von einer Batterie bzw. eines Akkumulators, die Schnittstellen sowie die Recheneinheit im Messkopf angeordnet. In diesem Fall besteht das photothermische Messgerät lediglich aus dem Messkopf sowie den darin angeordneten Komponenten. Folglich ist das photothermische Messgerät dann nicht nur tragbar, sondern auch mobil in dem Sinne, dass das photothermische Messgerät zumindest zeitweise unabhängig von Steckdosen ist.

Die Anregungslichtquelle ist vorzugsweise eine Leuchtdiode oder eine Laserdiode. Die Anregungslichtquelle wird kontinuierlich oder gepulst betrieben. Vorzugsweise ist die Anregungslichtquelle keine thermische Lichtquelle. Die Anregungslichtquelle weist vorzugsweise eine Emissionsleistung auf, welche eine Ausgangsleistung von wenigstens 50 mW erlaubt. Der Ausdruck "Emissionsleistung" meint die optische Leistung, welche unmittelbar nach Austritt aus der Anregungslichtquelle gemessen wird. Der Begriff "Ausgangsleistung" meint diejenige optische Leistung, welche schließlich aus dem Messkopf, also nach Abzug aller Verluste innerhalb des Messkopfes, austritt. Die Ausgangsleistung beträgt zweckmäßigerweise wenigstens 100 mW, vorteilhafterweise wenigstens 200 mW und besonders vorteilhafterweise wenigstens 300 mW. Gemäß einer besonders bevorzugten Ausführungsform beträgt die Ausgangsleistung wenigstens 450 mW.

Der Begriff "Infrarot" meint den Wellenlängenbereich von 1,4 µm bis 50 µm, vorzugsweise von 3 µm bis 15 µm und besonders vorzugsweise 7 µm bis 11 µm. Demzufolge ist der Infrarot-Sensor in dem entsprechenden Bereich detektionsfähig.

Das Abstandsmessgerät kann für eine beliebige Methode zur berührungsfreien Abstandsmessung ausgelegt sein. Insbesondere kommen die Abstandsmessmethoden über Schall-, Funk- und Lichtwellen in Betracht. Vorzugsweise arbeitet das Abstandsmessgerät nach einem optischen Verfahren, also mit Lichtwellen. Das Abstandsmessgerät arbeitet weiter vorzugsweise nach einem der optischen Verfahren der Triangulation, der Laufzeitmessung oder der Phasenverschiebungsmessung. Besonders vorzugsweise arbeitet das Abstandsmessgerät nach dem Verfahren der optischen Triangulation. Bevorzugt weist das Abstandsmessgerät eine zweite Lichtquelle und einen zweiten Sensor zur Detektion von reflektiertem Licht der zweiten Lichtquelle auf. Die zweite Lichtquelle ist vorzugsweise eine Leuchtdiode oder eine Laserdiode. Die zweite Lichtquelle wird kontinuierlich oder gepulst betrieben.

Der zu der zweiten Lichtquelle zugehörige zweite Sensor ist zur Detektion von reflektiertem Licht der zweiten Lichtquelle entsprechend ausgebildet.
Das Linsensystem dient zur Fokussierung der Anregungslichtstrahlen bzw. zum Aufsammeln der Wärmestrahlung von der Probe. Vorzugsweise weist das Linsensystem eine erste Linse für die Fokussierung des Anregungslichtes auf. Bevorzugt umfasst das Linsensystem eine zweite Linse zum Aufsammeln der Wärmestrahlung. Besonders bevorzugt sammelt die zweite Linse die divergente Wärmestrahlung von der Probe auf und fokussiert sie auf den Infrarot-Sensor. Es liegt im Rahmen der Erfindung, dass das Linsensystem Kollimatoren für die zweite Lichtquelle bzw. für den zweiten Sensor aufweist. Vorzugsweise haben die Kollimatoren die gleiche Brennweite. Die Kollimatoren dienen vorteilhafterweise dem Kollimieren des Lichts der zweiten Lichtquelle bzw. der Fokussierung des reflektierten Lichts der zweiten Lichtquelle von der Probe auf den zweiten Sensor.

Es liegt im Rahmen der Erfindung, dass das Linsensystem konfokal ist. Vorzugsweise weisen die zweite Linse und die erste Linse die gleiche Brennweite auf. Vorteilhafterweise liegen der Fokus der ersten Linse und der Fokus der zweiten Linse örtlich auf der Probe übereinander. Bevorzugt trifft das Licht der zweiten Lichtquelle fokussiert im Fokus der ersten Linse bzw. der zweiten Linse auf. Vorteilhafterweise sind die zweite Lichtquelle und der zweite Sensor um 180° bezüglich der optischen Achse der ersten Linse azimutal versetzt. Besonders vorteilhafterweise liegen die zweite Lichtquelle und der zweite Sensor in einer Ebene senkrecht zur optischen Achse der ersten Linie. Die Konfokalität des Linsensystems bedingt einerseits eine gute räumliche Übereinstimmung von photothermischer Messung und Abstandsmessung. Dies erlaubt eine genaue Fehlerkorrektur der photothermischen Messung. Zudem erlaubt die Konfokalität des Linsensystems eine sehr große Ausbeute der Wärmestrahlung. Dementsprechend geringer kann die Ausgangsleistung sein und dementsprechend ungefährlicher ist die photothermische Messung für anwesende Personen. Die Wahrscheinlichkeit von zusätzlichen Schutzmaßnahmen wird somit verringert und damit die Flexibilität gesteigert.

Vorteilhafterweise ist das Linsensystem koaxial. Vorzugsweise liegen die optischen Achsen der ersten Linse und der zweiten Linse übereinander. Dies erlaubt eine besonders kompakte Bauweise des Messkopfes und führt zu einer entsprechenden Handlichkeit, was wiederum die Flexibilität steigert.

Es liegt im Rahmen der Erfindung, dass der optische Pfad des Anregungslichtes von dem optischen Pfad der Wärmestrahlung entkoppelt ist. "Entkoppelt" meint, dass zur Führung des Anregungslichtes andere Optiken verwendet werden als zur Führung der Wärmestrahlung. Auf diese Weise können die entsprechenden Optiken besonders gut auf die jeweiligen Wellenlängen abgestimmt werden. Insbesondere weist das photothermische Messgerät keinen dichroitischen Spiegel auf. Folglich können die Lichtstrahlen besser geführt werden, was zu einer höheren Lichtausbeute und damit zu einer höheren Messgenauigkeit bzw. einer geringeren erforderlichen Emissionsleistung der Anregungslichtquelle führt.

Es liegt im Rahmen der Erfindung, dass der Messkopf wenigstens eine, vorzugsweise zwei und besonders vorzugsweise drei Pilotlichtquellen aufweist. Bevorzugt zeigt bzw. zeigen die Pilotlichtquelle(n) auf den Ort der photothermischen Messung auf der Probe. Weiter bevorzugt zeigen die Pilotlichtquellen den Arbeitsabstand an, indem die Lichtflecken die Pilotlichtquellen im Fokus der ersten bzw. zweiten Linie übereinander liegen. Die Pilotlichtquellen sind vorteilhafterweise Leuchtdioden. Besonders vorteilhafterweise sind die Pilotlichtquellen rote Leuchtdioden mit einer Wellenlänge im sichtbaren roten Spektrum. Gemäß einer bevorzugten Ausführungsform sind die Pilotlichtquellen auf der gleichen Kreisbahn wie der zweite Sensor und die zweite Lichtquelle angeordnet. Besonders bevorzugt sind die Pilotlichtquellen azimutal in gleichen Winkelabständen zueinander versetzt. Besonders bevorzugt befindet sich die Ebene der Pilotlichtquellen in der gleichen Ebene senkrecht zur optischen Achse wie die zweite Lichtquelle und der Sensor. Gemäß einer ganz besonders bevorzugten Ausführungsform sind den Pilotlichtquellen Kollimatoren zugeordnet. Führt der Nutzer den Messkopf mit den Pilotlichtquellen immer weiter an die Probe heran, so liegen die Lichtflecken der Pilotlichtquellen im Fokus von der ersten Linse und der zweiten Linse übereinander. Der Nutzer weiß nun, dass er sich im Bereich des Arbeitsabstandes befindet. Dieser Effekt ist bereits mit zwei Pilotlichtquellen möglich, doch ist bisweilen einer der beiden Strahlen schlecht sichtbar, so dass sich eine dritte Pilotlichtquelle anbietet.

Vorteilhafterweise ist die Anregungslichtquelle eine Laserdiode. Die Laserdiode wird bevorzugt kontinuierlich betrieben. Der Ausdruck "kontinuierlich" meint, dass die Laserdiode wenigstens über 0,1 ms hinweg im Dauerstrichbetrieb läuft. Gemäß einer bevorzugten Ausführungsform weist die Laserdiode eine Emissionswellenlänge zwischen 1400 nm und 2200 nm auf. Dies dient einerseits der Vergrößerung der Sicherheit und damit der Flexibilität und andererseits wird so sichergestellt, dass der Infrarot-Sensor nicht fälschlicherweise direkt vom Anregungslicht stammende Infrarot-Anteile misst. Ferner wird in diesem Wellenlängenbereich das Anregungslicht besonders stark von der Probe absorbiert, wodurch die zur Erwärmung benötigte Ausgangsleistung verringert wird.

Vorzugsweise ist die zweite Lichtquelle eine Leuchtdiode. Weiter vorzugsweise weist die zweite Lichtquelle eine Emissionswellenlänge zwischen 800 nm und 1100 nm auf. Damit ist das Licht der zweiten Lichtquelle mittels herkömmlicher Silizium-Photodioden gut messbar. Insbesondere ist die zweite Lichtquelle zur Vergrößerung des Signal-zu-Rausch-Verhältnisses moduliert. Die Modulation der zweiten Lichtquelle beträgt vorzugsweise 200 Hz bis 5 kHz und besonders vorzugsweise 500 Hz bis 2 kHz. Der zweite Sensor ist bevorzugt ortsempfindlich. Vorteilhafterweise ist der zweite Sensor ein analoges Bauteil. Besonders bevorzugt ist der zweite Sensor ein optischer Positionssensor, insbesondere ein analoger optischer Positionssensor. Der gemessene Abstand ist der Auslöseparameter zur Auslösung der photothermischen Messung. Bevorzugt wird die Anregungslichtquelle automatisch bei einem gemessenen Abstand in einem Auslösebereich von ± 10 mm, besonders bevorzugt von ± 5 mm und ganz besonders bevorzugt von ± 3 mm um den Arbeitsabstand herum ausgelöst. Vorzugsweise wird die Anregungslichtquelle lediglich dann eingeschaltet, wenn der gemessene Abstand im Auslösebereich liegt und gleichzeitig wenigstens 0,5 s, vorzugsweise wenigstens 0,1 s und besonders vorzugsweise wenigstens 0,2 s im Auslösebereich gehalten wird. Der Lichtpuls weise eine Dauer von 0,1 ms bis 10 s, vorzugsweise von 1 ms bis 5 ms und besonders vorzugsweise von 5 ms bis 50 ms auf.

Es liegt im Rahmen der Erfindung, dass der Infrarot-Sensor einen breitbandigen Infrarot-Detektor umfasst. Vorzugsweise ist der Infrarot-Sensor im Bereich von 2 µm bis 20 µm und besonders vorzugsweise im Bereich von 5 µm bis 10 µm empfindlich. Gemäß einer bevorzugten Ausführungsform umfasst der Infrarot-Sensor wenigstens einen Infrarotfilter, welcher restliche Nahinfrarot-Anteile herausfiltert.

Gemäß einer bevorzugten Ausführungsform weist das Linsensystem eine Brennweite von 10 mm bis 50 mm und vorzugsweise von 15 mm bis 40 mm auf. Ganz besonders vorzugsweise weist das Linsensystem eine Brennweite von 25 mm bis 40 mm auf. Die Brennweite entspricht vorzugsweise dem Arbeitsabstand. Damit wird einerseits ein ausreichend großer Arbeitsabstand gewährleistet, welcher ein unbeabsichtigtes Berühren der Probe oft verhindert. Zudem liegt diese verhältnismäßig kurze Brennweite außerhalb der Erfassungsmöglichkeit des menschlichen Auges (Akkomodationsabstand), was wiederum die Sicherheit des photothermischen Messgerätes erhöht. Schließlich bedeutet die kurze Brennweite, dass die aus dem Messkopf austretenden Strahlen eine große Konvergenz bzw. später große Divergenz aufweisen. Die große Divergenz wiederum begründet die Ungefährlichkeit der Lichtstrahlen in etwas größeren Entfernungen, was wiederum die Flexibilität erhöht.

Gemäß einer bevorzugten Ausführungsform enthält das Linsensystem eine sphärische Linse. Vorzugsweise ist die erste Linse die sphärische Linse. Die sphärische Form verursacht eine Aberration im Bereich des Fokus, wodurch die Rayleighlänge im Fokus vergrößert wird. Vorzugsweise wird die Rayleighlänge auf mehr als 5 mm, und weiter vorzugsweise auf mehr als 7 mm und besonders vorzugsweise auf mehr als 10 mm vergrößert. Dies bedingt eine größere Abstandsunempfindlichkeit, was die photothermische Messung robuster macht. Bei gleichbleibender Güte der photothermischen Messungen kann aufgrund der größeren Abstandsunempfindlichkeit eine schwächere Anregungslichtquelle gewählt werden, so dass eine geringere Ausgangsleistung verlangt wird und in der Folge die Sicherheit vergrößert wird. Gemäß einer bevorzugten Ausführungsform ist die erste Linse sphärisch und ringförmig. Vorteilhafterweise ist die erste Linse eine Linse mit Antireflexbeschichtung für nahinfrarotes Licht.

Bevorzugt ist die erste Linse plan-konvex ausgebildet. Weiter vorteilhafterweise ist die plane Seite der ersten Linse zur Probe hin ausgerichtet.

Vorteilhafterweise umfasst das Linsensystem eine Infrarot-Linse. Insbesondere ist die zweite Linse die Infrarot-Linse. Die Infrarot-Linse ist bevorzugt kreisrund. Die Infrarot-Linse ist vorzugsweise plan-konvex. Noch weiter bevorzugt ist die konvexe Seite der Infrarot-Linse der Probe zugewandt. Gemäß einer besonders bevorzugten Ausführungsform wird die Infrarot-Linse von der ersten Linse ringförmig umlaufen.

Es liegt im Rahmen der Erfindung, dass das Anregungslicht abschnittsweise einen ringförmigen Querschnitt aufweist. Vorteilhafterweise ist im Messkopf ein Kegelspiegel vorgesehen. Vorzugsweise umfasst der Messkopf einen Außenkegelspiegel und einen Innenkegelspiegel. Weiter vorzugsweise trifft das Licht der Anregungslichtquelle zunächst auf den Außenkegelspiegel und dann auf den Innenkegelspiegel. Dies bedingt eine sehr geringe Abschattung, wodurch wenig Emissionslichtleistung verloren geht. Noch weiter bevorzugt wird das Licht der Anregungslichtquelle von dem Außenkegelspiegel ringförmig aufgespalten. Gemäß einer besonders bevorzugten Ausführungsform wird das ringförmig aufgespaltene Anregungslicht von dem Innenkegelspiegel Richtung Probe umgelenkt. Vorzugsweise ist der Innenkegelspiegel leicht parabolisch zur Kollimierung des divergenten Anregungslichtes geformt. Weiter vorzugsweise befindet sich im Inneren der ringförmigen ersten Linse die zweite bzw. die Infrarot-Linse. Im Inneren des kollimierten Ringstrahls sind vorzugsweise der Infrarot-Sensor, die zweite Lichtquelle und der zweite Sensor angeordnet. Besonders bevorzugt sind die zweite Lichtquelle, der zweite Sensor und der Infrarot-Sensor auf einer Platine befestigt, welche wiederum mittels einer Spinne am Messkopfgehäuse gehalten wird. Es ist zweckmäßig, dass auch die Pilotlichtquelle(n) auf der Platine befestigt sind. Die Anordnung innerhalb des ringförmigen Anregungslichtes ermöglicht eine besonders kompakte Bauweise des Messkopfes.

Gemäß einer bevorzugten Ausführungsform enthält der Messkopf einen Diffusor. Bevorzugt ist der Diffusor im optischen Pfad des Anregungslichtes angeordnet. Besonders bevorzugt ist der Diffusor zwischen dem Innenkegelspiegel und der ersten Linse angeordnet. Vorzugsweise ist der Diffusor eine Streuscheibe, ein holographischer Diffusor oder ein aktives oder passives elektronisches *Array* zur Strahlformung. Besonders bevorzugt enthält der Messkopf einen holographischen Diffusor. Mittels des Diffusors ist es möglich, den Fokus des Anregungslichtes auf der Probe zu verbreitern, so dass die photothermische Messung ortsunempfindlicher wird.

Die Erfindung lehrt zur Lösung des technischen Problems ein Verfahren zur photothermischen Messung mit einem insbesondere erfindungsgemäßen photothermischen Messgerät, wobei das photothermische Messgerät einen handlichen Messkopf, eine Anregungslichtquelle, einen Infrarot-Sensor und ein Abstandsmessgerät umfasst, wobei mit dem Abstandsmessgerät fortlaufend der Abstand zwischen dem Messkopf und einer Probe gemessen wird, wobei dann in Abhängigkeit von dem gemessenen Abstand die Anregungslichtquelle automatisch ausgelöst wird und die Anregungslichtquelle einen Lichtpuls aussendet, wobei die Probe durch den Lichtpuls erwärmt wird und Wärmestrahlung abstrahlt, wobei dann die Wärmestrahlung von dem Infrarot-Sensor zeitaufgelöst erfasst wird, wobei dann eine Berechnung der Schichtdicke bzw. der Schichtdicken der Probe vorgenommen wird. Der gemessene Abstand kann angezeigt werden. Die Anzeige kann optisch oder akustisch erfolgen.

Die optische Anzeige ist vorteilhafterweise mit dem Farbcode von Ampeln vergleichbar.

Der Ausdruck "fortlaufend" meint, dass mit Einschaltung des photothermischen Messgerätes jederzeit automatisch wiederholte Abstandsmessungen stattfinden. Vorzugsweise finden die fortlaufenden Abstandsmessungen durchgehend statt. Dabei meint der Begriff "durchgehend", dass die Abtastrate des Abstandsmessgerätes größer als 20 Hz, vorzugsweise größer als 40 Hz und besonders vorzugsweise größer als 80 Hz ist. Der gemessene Abstand ist der Auslöseparameter zur Auslösung der photothermischen Messung. Bevorzugt wird die Anregungslichtquelle automatisch bei einem gemessenen Abstand in einem Auslösebereich von ± 10 mm, besonders bevorzugt von ± 5 mm und ganz besonders bevorzugt von ± 3 mm um den Arbeitsabstand herum ausgelöst. Vorzugsweise wird die Anregungslichtquelle lediglich dann eingeschaltet, wenn der gemessene Abstand im Auslösebereich liegt und gleichzeitig wenigstens 0,05 s, vorzugsweise wenigstens 0,1 s und besonders vorzugsweise wenigstens 0,2 s im Auslösebereich gehalten wird. Der Lichtpuls weist eine Dauer von 0,1 ms bis 10 s, vorzugsweise von 1 ms bis 100 ms und besonders vorzugsweise von 5 ms bis 50 ms auf.

Es liegt im Rahmen der Erfindung, dass die Abstandsmessungen auch im Zeitraum zwischen der Aussendung des Lichtpulses und der Erfassung der Wärmestrahlung fortlaufen. Vorzugsweise sind Beginn und Ende der photothermischen Messung automatisch. Vorzugsweise hängt der Beginn der Messung vom gemessenen Abstand sowie von der Haltezeit ab. Bevorzugt hängt das Ende die Messung von dem zu erwartenden Materialsystem bzw. von der zu erwarteten Schichtdicke ab. Wenn während der gesamten photothermischen Messung der Abstand gemessen wird, erlaubt dies im Nachhinein eine Fehlerkorrektur, da der menschlichen Hand eine natürliche Unruhe zu eigen ist. Bei sehr starken Verwacklungen kann mit Hilfe der Abstandsmessung eine photothermische Messung vollständig verworfen werden, da die photothermische Messung dann als eher unzuverlässig zu erachten ist.

Der Erfindung liegt die Erkenntnis zugrunde, dass das erfindungsgemäße photothermische Messgerät präzise und flexibel ist bei einer gleichzeitigen hohen Wirtschaftlichkeit. Die Präzision wird durch die Abstandsmessungen ermöglicht. Die Abstandsmessungen ermöglichen eine automatische Auslösung der photothermischen Messung, wodurch die photothermische Messung im Arbeitsabstand gewährleistet wird. Befindet sich der Messkopf im Arbeitsabstand zur Probe, so liegt der Fokus der Lichtstrahlen auf der Probenoberfläche, wodurch eine besonders hohe Ausbeute der reflektierten Wärmestrahlung gewährleistet ist. In der Folge ist die photothermische Messung entsprechend genau. Die photothermische Messung wird umso präziser, wenn die Abstandsmessungen zusätzlich als Fehlerkorrektur benutzt werden. Die Pilotlichtquellen ermöglichen dem Nutzer erstens eine zielstrebige und daher auch schnelle Heranführung des Messkopfes zum Arbeitsabstand hin und zweitens ein verhältnismäßig ruhiges Halten im korrekten Arbeitsabstand. Dies verringert wiederum die Verwacklungsgefahr und erhöht somit die Präzision. Der konfokale und koaxiale Aufbau des Linsensystems sowie die Entkopplung der optischen Pfade innerhalb des Messkopfes führen zu einer besonders hohen Ausbeute des verwertbaren Lichtes. Dies verringert einerseits die benötigte optische Ausgangsleistung und erhöht damit die Sicherheit. Andererseits kann damit auf entsprechend leistungsstarke und damit wenig kompakte bzw. teure Anregungslichtquellen verzichtet werden. Der ringförmige und koaxiale Strahlenverlauf ermöglicht zudem eine besonders kompakte Anordnung der Bauelemente in dem Messkopf, so dass der Messkopf sehr handlich gestaltet werden kann. In der Folge ergibt sich eine sehr hohe Flexibilität. Die geringen Abmessungen des photothermischen Messgerätes führen auch zu entsprechend geringen Kosten und damit zu einer hohen Wirtschaftlichkeit.

Nachfolgend wird die Erfindung anhand lediglich einer lediglich ein Ausführungsbeispiel darstellenden Zeichnung näher erläutert. Es zeigen in schematischer Darstellung:
- Fig. 1: eine perspektivische Ansicht eines erfindungsgemäßen photothermischen Messgerätes bei der Anwendung,
- Fig. 2: einen Längsschnitt durch einen Messkopf des photothermischen Messgerätes aus Fig. 1,
- Fig. 3: eine Vorderansicht des Messkopfes aus den Fig. 1 und 2.

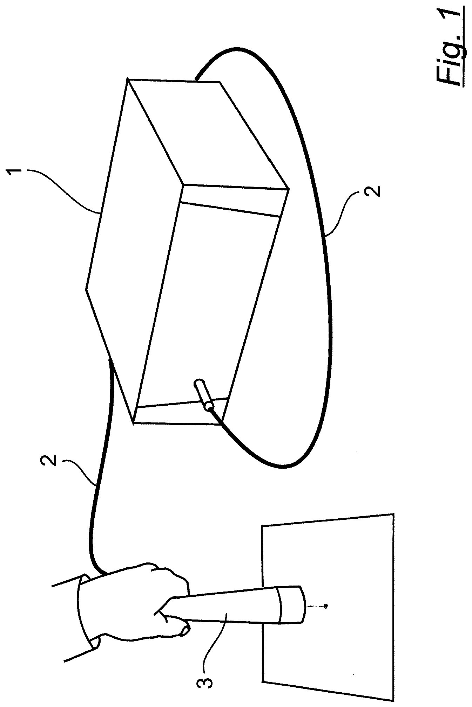

In Fig. 1 ist das erfindungsgemäße photothermische Messgerät in vereinfachter Form abgebildet. Das photothermische Messgerät umfasst eine tragbare Basis 1, an welcher ein Kabel 2 angeschlossen ist, welches Kabel 2 in einen Messkopf 3 mündet. Die Basis 1 weist eine nicht dargestellte Spannungsversorgung, eine Recheneinheit sowie Schnittstellen auf, mit welchen die Basis beispielsweise an Rechner angeschlossen werden kann. Der Messkopf 3 entspricht von seinen Abmessungen her einem handlichen Werkzeug, mit welchem eine entsprechende Anwendungsfreiheit gewährleistet wird. Diese Anwendungsfreiheit ist insbesondere in der fertigungsnahen Qualitätsüberprüfung von, beispielsweise, Lackschichten von großem Vorteil. Der Messkopf 3 vermisst, wie in Fig. 1 dargestellt, eine Schichtdicke einer nur angedeuteten Probe 5.

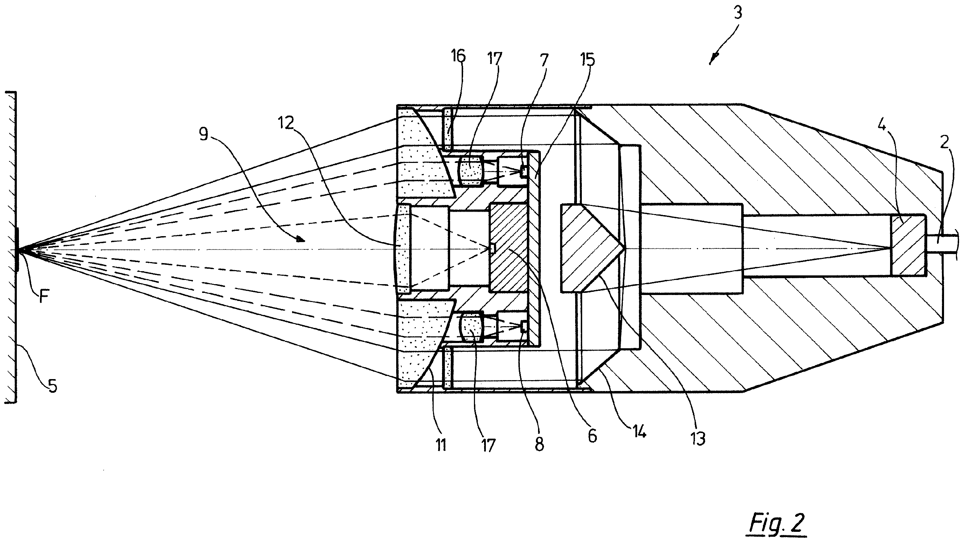

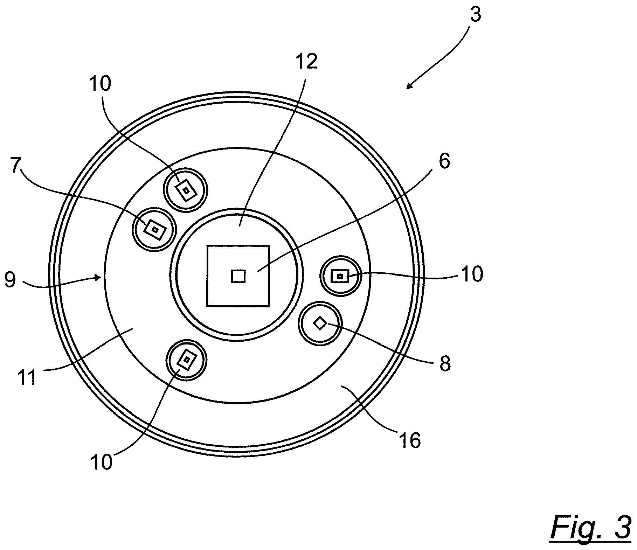

In Fig. 2 ist ein Längsschnitt des Messkopfes 3 mit Strahlengängen dargestellt. Diese Ansicht wird ergänzt durch die Vorderansicht des Messkopfes 3 aus Fig. 3. Die elektrische Leistung wird mittels des Kabels 2 zum Messkopf 3 geführt. Im Messkopf 3 verteilt sich die elektrische Leistung auf eine Anregungslichtquelle 4 in Form einer Laserdiode und auf eine Platine 15. Auf der Platine 15 befinden sich eine zweite Lichtquelle 7 in Form einer SMD-Leuchtdiode (*surface mounted device*)*,* ein zweiter Sensor 8 in Form einer Photodiode, drei PilotLichtquellen 10, ebenfalls in Form von SMD-Leuchtdioden sowie schließlich ein Infrarot-Sensor 6. Die Leuchtdioden 7, 10 sowie der Infrarot-Sensor 6 beziehen von der Platine 15 die elektrische Leistung.

Der Messkopf 3 weist insgesamt sieben optische Pfade auf. Im ersten Pfad wird das Licht der Anregungslichtquelle 4 in Form einer Laserdiode mit einer Wellenlänge zwischen 1.400 mm und 2.200 mm mit weniger als 0,5 W Emmisionsleistung zunächst konvergent emittiert. Dann trifft es auf einen Außenkegelspiegel 13, welcher das Licht auf einen Innenkegelspiegel 14 wirft. Der Innenkegelspiegel 14 ist zur Kollimierung des Anregungslichtes leicht parabolisch geformt. Das so kollimierte Licht weist nun einen ringförmigen Querschnitt auf, wobei der ringförmige Strahl die Platine 15 zylindrisch umschließt. Der Außenkegelspiegel 13 ist über eine nicht dargestellte Spinne mit dem Gehäuse des Messkopfes 3 verbunden. Der ringförmige Strahl des Anregungslichtes trifft nun auf einen Diffusor 16 in Form eines holographischen Diffusors. Anschließend wird der ringförmige Anregungslichtstrahl durch eine ringförmige Linse 11 auf einen Fokus F in 35 mm Entfernung gebündelt. Die ringförmige Linse 11 ist sphärisch, so dass durch Aberration die Rayleighlänge im Fokus F auf etwa ± 5 mm verlängert wird. Der Strahldurchmesser im Fokus F wird durch den Diffusor 16 vergrößert. Der Lichtfleck im Fokus F auf der Probe 5 ist somit in allen drei Dimensionen fehlertoleranter.

Die von der Probe 5 abgestrahlte Wärme wird von einer Infrarot-Linse 12 aufgesammelt und auf den Infrarot-Sensor 6 fokussiert. Der Infrarot-Sensor 6 weist Filter auf, welche lediglich das Infrarot-Licht transmittieren lassen. Die Wärmestrahlung in Form des Infrarot-Lichtes wird schließlich von dem Infrarot-Sensor 6 zeitaufgelöst erfasst. Die zeitaufgelösten Werte werden dann über die Platine 15 und das Kabel 2 an die Recheneinheit innerhalb der Basis 1 übermittelt, dort verarbeitet und dann schließlich über die Schnittstellen aufbereitet zur Verfügung gestellt.

Der Strahl der zweiten Lichtquelle 7 (Leuchtdiode im Nahinfrarot, unter 1100 nm, mit 1 kHz moduliert) wird zunächst von einem Kollimator 17 kollimiert und dann von der ringförmigen Linse 11 auf den Fokus F auf der Probe 5 gebündelt. Entsprechend dem Einfallwinkel wird das Licht über einen Ausfallwinkel zurückreflektiert, von der ringförmigen Linse 11 kollimiert und von einem weiteren Kollimator 17 auf den zweiten Sensor 8 fokussiert. Der zweite Sensor 8 ist ein analoges, positionsempfindliches Bauelement (*position sensitive device,* PSD), mit welchem die Abstandsmessmethode der Triangulation durchgeführt wird.

Die Pilotlichtquellen 10 in Form von roten Leuchtdioden sind gemäß Fig. 3 auf der gleichen Kreisbahn wie die zweite Lichtquelle 7 und der zweite Sensor 8 angeordnet und zueinander um 120° versetzt. Damit entspricht der Strahlverlauf der Lichtstrahlen der Pilotlichtquellen 10 mit Ausnahme des azimutalen Versatzes dem Strahlenverlauf des Strahls der zweiten Lichtquelle 7 in Fig. 2. Allerdings laufen die Lichtstrahlen der Pilotlichtquellen 10 aufgrund des azimutalen Versatzes auf dem Rückweg ins Leere.

Mit Einschalten des photothermischen Messgerätes wird fortlaufend und durchgehend mit einer Abtastung von 100 Hz der Abstand zwischen dem Messkopf 3 und der Probe 5 mittels Triangulation gemessen, was jedoch zunächst noch keine photothermische Messung auslöst. Mit Hilfe der Lichtstrahlen der Pilotlichtquellen 10 kann der Bediener den Messkopf sehr schnell in eine für die photothermische Messung brauchbare Entfernung zur Probe 5 bringen. Dazu muss er lediglich den Messkopf 3 immer näher an die Probe 5 heranführen, bis schließlich die drei Lichtflecken der Pilotlichtquellen 10 übereinander liegen. Dann befindet sich die Probe 5 in etwa im Fokus F des Linsensystems 9.

Hält nun der Bediener den Messkopf 3 in einem Bereich von ± 3 mm um den Arbeitsabstand von 25 mm und dies in einem Zeitraum von beispielsweise 0,5 s, so wird automatisch die photothermische Messung ausgelöst. Hierzu wird ein Puls der Anregungslichtquelle 4 mit einer Dauer von 0,1 bis 3 s, jeweils in Abhängigkeit von der zu erwartenden Schichtdicke, emittiert. Der Infrarot-Sensor 6 erfasst dann insbesondere den Anstieg und das Abklingen der Wärmestrahlung. Dieser Verlauf wird mit dem charakteristischen Verhalten des entsprechenden Materials durch die Recheneinheit verglichen und hieraus dann die Schichtdicke abgeleitet.

Während der photothermischen Messung werden weiterhin die Abstände zwischen Messkopf 3 und Probe 5 gemessen. Die Abstandsmessungen ermöglichen einerseits eine Fehlerkorrektur der photothermischen Messung, welche Fehlerkorrektur aufgrund der unruhigen menschlichen Hand zweckmäßig ist. Bei extremen Verwacklungen andererseits führen die Abstandsmessungen dazu, dass solche extremen Verwacklungen erfasst werden und die dazugehörigen photothermischen Messungen verworfen werden.

## Patentansprüche

1. Photothermisches Messgerät zur Messung von Schichtdicken, insbesondere von Lackschichtdicken,
umfassend einen handlichen Messkopf (3),
wobei das photothermische Messgerät eine Anregungslichtquelle (4) zur Erwärmung einer Probe (5) aufweist,
wobei das photothermische Messgerät einen Infrarot-Sensor (6) zur Detektion von Wärmestrahlung der erwärmten Probe (5) umfasst,
wobei im photothermischen Messgerät ein Abstandsmessgerät zur Messung des Abstands zwischen Messkopf (3) und Probe (5) vorgesehen ist,
wobei der Messkopf (3) ein Linsensystem (9) umfasst, **dadurch gekennzeichnet, dass**
das photothermische Messgerät in Abhängigkeit von der Abstandsmessung auslösbar ist, wobei die photothermische Messung im Falle eines Abstandes im Sollbereich automatisch ausgelöst wird.

2. Photothermisches Messgerät nach Anspruch 1, wobei das Linsensystem (9) konfokal ist.

3. Photothermisches Messgerät nach Anspruch 1 oder 2, wobei das Linsensystem (9) koaxial ist.

4. Photothermisches Messgerät nach einem der Ansprüche 1 bis 3, wobei der optische Pfad des Anregungslichtes von dem optischen Pfad der Wärmestrahlung entkoppelt ist.

5. Photothermisches Messgerät nach einem der Ansprüche 1 bis 4, wobei der Messkopf wenigstens eine, vorzugsweise zwei und besonders vorzugsweise drei Pilotlichtquellen (10) aufweist.

6. Photothermisches Messgerät nach einem der Ansprüche 1 bis 5, wobei die Anregungslichtquelle (4) eine Laserdiode ist.

7. Photothermisches Messgerät nach einem der Ansprüche 1 bis 6, wobei die zweite Lichtquelle (7) eine Leuchtdiode ist.

8. Photothermisches Messgerät nach einem der Ansprüche 1 bis 7, wobei das Linsensystem (9) eine Brennweite von 10 bis 50 mm, vorzugsweise von 15 mm bis 40 mm, aufweist.

9. Photothermisches Messgerät nach einem der Ansprüche 1 bis 8, wobei das Linsensystem (9) eine sphärische Linse (11) enthält.

10. Photothermisches Messgerät nach einem der Ansprüche 1 bis 9, wobei das Linsensystem (9) eine Infrarot-Linse (12) umfasst.

11. Photothermisches Messgerät nach einem der Ansprüche 1 bis 10, wobei das Anregungslicht abschnittsweise einen ringförmigen Querschnitt aufweist.

12. Photothermisches Messgerät nach einem der Ansprüche 1 bis 10, wobei der Messkopf (3) einen Diffusor 16 enthält.

13. Verfahren zur photothermischen Messung mit einem photothermischen Messgerät, insbesondere einem Messgerät gemäß einem der Ansprüche 1 bis 12, wobei das photothermische Messgerät einen handlichen Messkopf (3), eine Anregungslichtquelle (4), einen Infrarot-Sensor (6) und ein Abstandsmessgerät umfasst,
wobei mit dem Abstandsmessgerät fortlaufend der Abstand zwischen dem Messkopf (3) und einer Probe (5) gemessen wird,
wobei dann in Abhängigkeit von dem gemessenen Abstand die Anregungslichtquelle (4) automatisch ausgelöst wird und die Anregungslichtquelle (4) einen Lichtpuls aussendet,
wobei die Probe (5) durch den Lichtpuls erwärmt wird und Wärmestrahlung abstrahlt,
wobei dann die Wärmestrahlung von dem Infrarot-Sensor (6) zeitaufgelöst erfasst wird,
wobei dann eine Berechnung der Schichtdicke bzw. der Schichtdicken der Probe (5) vorgenommen wird.

14. Verfahren zur photothermischen Messung nach Anspruch 13, wobei die Abstandsmessungen auch im Zeitraum zwischen der Aussendung des Lichtpulses und der Erfassung der Wärmestrahlung fortlaufen.

## Claims

1. A photothermal measuring device for measuring layer thicknesses, in particular lacquer layer thicknesses,
comprising a handy measuring head (3),
wherein the photothermal measuring device comprises an excitation light source (4) for heating a sample (5),
wherein the photothermal measuring device comprises an infrared sensor (6) for detecting thermal radiation of the heated sample (5),
wherein a distance measuring device for measuring the distance between the measuring head (3) and the sample (5) is provided in the photothermal measuring device,
wherein the measuring head (3) comprises a lens system (9), **characterised in that**
the photothermal measuring device can be triggered depending on the distance measurement, wherein the photothermal measurement is automatically triggered in the case of a distance in the setpoint range.

2. The photothermal measuring device according to claim 1, wherein the lens system (9) is confocal.

3. The photothermal measuring device according to claim 1 or 2, wherein the lens system (9) is coaxial.

4. The photothermal measuring device according to any one of claims 1 to 3, wherein the optical path of the excitation light is decoupled from the optical path of the thermal radiation.

5. The photothermal measuring device according to any one of claims 1 to 4, wherein the measuring head comprises at least one, preferably two and particularly preferably three pilot light sources (10).

6. The photothermal measuring device according to any one of claims 1 to 5, wherein the excitation light source (4) is a laser diode.

7. The photothermal measuring device according to any one of claims 1 to 6, wherein the second light source (7) is a light-emitting diode.

8. The photothermal measuring device according to any one of claims 1 to 7, wherein the lens system (9) has a focal length of 10 to 50 mm, preferably of 15 mm to 40 mm.

9. The photothermal measuring device according to any one of claims 1 to 8, wherein the lens system (9) contains a spherical lens (11).

10. The photothermal measuring device according to any one of claims 1 to 9, wherein the lens system (9) comprises an infrared lens (12).

11. The photothermal measuring device according to any one of claims 1 to 10, wherein the excitation light has an annular cross-section at least in some sections.

12. The photothermal measuring device according to any one of claims 1 to 10, wherein the measuring head (3) contains a diffuser (16).

13. A method for photothermal measurement with a photothermal measuring device, in particular a measuring device according to any one of claims 1 to 12,
wherein the photothermal measuring device comprises a handy measuring head (3), an excitation light source (4), an infrared sensor (6) and a distance measuring device,
wherein the distance between the measuring head (3) and a sample (5) is continuously measured with the distance measuring device,
wherein the excitation light source (4) is then automatically triggered depending on the measured distance and the excitation light source (4) emits a light pulse,
wherein the sample (5) is heated by the light pulse and irradiates thermal radiation,
wherein the thermal radiation is then detected time-resolved by the infrared sensor (6),
wherein a calculation of the layer thickness or the layer thicknesses of the sample (5) is then carried out.

14. The method for photothermal measurement according to claim 13, wherein the distance measurements also continue in the period between the emission of the light pulse and the detection of the thermal radiation.

## Revendications

1. Instrument de mesure photothermique destiné à mesurer des épaisseurs de couches, notamment des épaisseurs de couches de peinture,
comprenant une tête de mesure (3) manuelle, l'instrument de mesure photothermique comportant une source lumineuse d'excitation (4) destinée à chauffer une éprouvette (5),
l'instrument de mesure photothermique comprenant un capteur d'infrarouges (6) pour la détection du rayonnement thermique de l'éprouvette (5) chauffée,
dans l'instrument de mesure photothermique étant prévue une jauge de distance destinée à mesurer la distance entre la tête de mesure (3) et l'éprouvette (5),
la tête de mesure (3) comprenant un système lenticulaire (9), **caractérisé en ce que**
l'instrument de mesure photothermique est déclenchable en fonction de la mesure de la distance, la mesure photothermique étant automatiquement déclenchée dans le cas d'une distance située dans la plage de consigne.

2. Instrument de mesure photothermique selon la revendication 1, le système lenticulaire (9) étant confocal.

3. Instrument de mesure photothermique selon la revendication 1 ou 2, le système lenticulaire (9) étant coaxial.

4. Instrument de mesure photothermique selon l'une quelconque des revendications 1 à 3, le trajet optique de la lumière d'excitation étant découplé du trajet optique du rayonnement thermique.

5. Instrument de mesure photothermique selon l'une quelconque des revendications 1 à 4, la tête de mesure comportant au moins une, de préférence deux et particulièrement de préférence trois sources lumineuses pilotes (10).

6. Instrument de mesure photothermique selon l'une quelconque des revendications 1 à 5, la source lumineuse d'excitation (4) étant une diode laser.

7. Instrument de mesure photothermique selon l'une quelconque des revendications 1 à 6, la deuxième source lumineuse (7) étant une diode électroluminescente.

8. Instrument de mesure photothermique selon l'une quelconque des revendications 1 à 7, le système lenticulaire (9) faisant preuve d'une distance focale de 10 à 50 mm, de préférence de 15 mm à 40 mm.

9. Instrument de mesure photothermique selon l'une quelconque des revendications 1 à 8, le système lenticulaire (9) contenant une lentille sphérique (11).

10. Instrument de mesure photothermique selon l'une quelconque des revendications 1 à 9, le système lenticulaire (9) comprenant une lentille infrarouge (12).

11. Instrument de mesure photothermique selon l'une quelconque des revendications 1 à 10, la lumière d'excitation comportant par segments une section transversale de forme annulaire.

12. Instrument de mesure photothermique selon l'une quelconque des revendications 1 à 10, la tête de mesure (3) contenant un diffuseur (16).

13. Procédé destiné à la mesure photothermique à l'aide d'un instrument de mesure photothermique, notamment un instrument de mesure selon l'une quelconque des revendications 1 à 12,
l'instrument de mesure photothermique comprenant une tête de mesure (3) manuelle, une source lumineuse d'excitation (4), un capteur d'infrarouges (6) et une jauge de distance,
à l'aide de la jauge de distance, la distance entre la tête de mesure (3) et une éprouvette (5) étant mesurée en continu,
sachant qu'ensuite, en fonction de la distance mesurée, la source lumineuse d'excitation (4) est automatiquement déclenchée et la source lumineuse d'excitation (4) émet une impulsion lumineuse,
l'éprouvette (5) étant chauffée par l'impulsion lumineuse et dégageant un rayonnement thermique,
le rayonnement thermique étant détecté par le capteur d'infrarouges (6) avec une résolution temporelle,
sachant qu'il est procédé ensuite à un calcul de l'épaisseur de couche ou des épaisseurs de couches de l'éprouvette (5).

14. Procédé destiné à la mesure photothermique selon la revendication 13, les mesures de distance se poursuivant également dans la période entre l'émission de l'impulsion lumineuse et la détection du rayonnement thermique.
